Europäisches Patentamt
European Patent Office
Office européen des brevets

(11) Veröffentlichungsnummer: **0 127 049**
**A2**

# (12) EUROPÄISCHE PATENTANMELDUNG

(21) Anmeldenummer: **84105438.0**

(22) Anmeldetag: **14.05.84**

(51) Int. Cl.³: **C 07 F 9/12**
**C 07 F 9/18, C 07 F 9/24**
**A 01 N 57/14, A 01 N 57/30**

(30) Priorität: **27.05.83 JP 92516/83**

(43) Veröffentlichungstag der Anmeldung:
**05.12.84 Patentblatt 84/49**

(84) Benannte Vertragsstaaten:
**CH DE FR GB IT LI**

(71) Anmelder: **NIHON TOKUSHU NOYAKU SEIZO K.K.**
**No.4, 2-chome, Nihonbashi Honcho Chuo-ku**
**Tokyo 103(JP)**

(72) Erfinder: **Saito, Junichi**
**3-7-12, Osawa**
**Mitaka-shi Tokyo(JP)**

(72) Erfinder: **Kudamatsu, Akio**
**179, Kariyado Nakahara-ku**
**Kawasaki-shi Kanagawa-ken(JP)**

(72) Erfinder: **Kume, Toyohiko**
**6-7-8, Asahigaoka**
**Hino-shi Tokyo(JP)**

(72) Erfinder: **Tsuboi, Shinichi**
**3-26-1, Hirayama**
**Hino-shi Tokyo(JP)**

(74) Vertreter: **Schumacher, Günter, Dr. et al,**
**c/o Bayer AG Konzernverwaltung RP Patentabteilung**
**D-5090 Leverkusen 1 Bayerwerk(DE)**

## (54) Organische Phoshorsäureester.

(57) Die vorliegende Erfindung betrifft neue organische Phosphorsäureester der allgemeinen Formel (I)

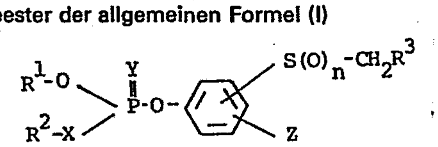

worin

X O, S oder NH bezeichnet,

Y O oder S bezeichnet,

$R^1$ eine niedere Alkyl-Gruppe bezeichnet,

$R^2$ eine niedere Alkyl-Gruppe oder eine niedere Alkoxy-Niederalkyl-Gruppe bezeichnet,

$R^3$ eine fluor-substituierte niedere Alkyl-Gruppe bezeichnet,

Z eine niedere Alkyl-Gruppe, eine niedere Alkoxy-Gruppe oder ein Halogen-Atom bezeichnet und

n 0 oder 2 bezeichnet,

die als pestizid aktive Mittel verwendet werden können.

EP 0 127 049 A2

## Organische Phosphorsäureester

Die vorliegende Erfindung betrifft neue organische Phosphorsäureester, Verfahren zu ihrer Herstellung, diese Verbindungen enthaltende insektizide, mitizide und nematizide Mittel sowie ihre Verwendung als Pestizide.

Insbesondere betrifft die vorliegende Erfindung neue organische Phosphorsäureester der allgemeinen Formel (I)

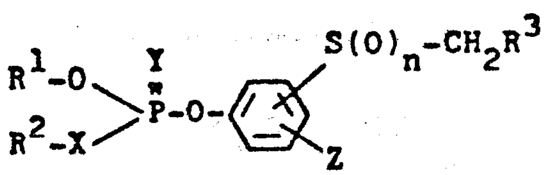

(I)

in der

X O, S oder NH bezeichnet,

Y O oder S bezeichnet,

$R^1$ eine niedere Alkyl-Gruppe bezeichnet,

$R^2$ eine niedere Alkyl-Gruppe oder eine niedere Alkoxy-Niederalkyl-Gruppe bezeichnet,

$R^3$ eine fluor-substituierte niedere Alkyl-Gruppe bezeichnet,

Z eine niedere Alkyl-Gruppe, eine niedere Alkoxy-Gruppe oder ein Halogen-Atom bezeichnet und

n 0 oder 2 bezeichnet.

Die Verbindungen der allgemeinen Formel (I) können mittels der folgenden Verfahren hergestellt werden, auf die sich die vorliegende Erfindung ebenfalls erstreckt.

Verfahren i)

Ein Verfahren zur Herstellung der organischen Phosphorsäureester der allgemeinen Formel (I) umfaßt die Reaktion eines Phosphorsäureesterhalogenids der allgemeinen Formel

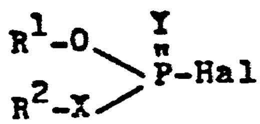

(II)

,

in der
X, Y, $R^1$, und $R^2$ die im Vorstehenden angegebenen Bedeutungen haben und
Hal ein Halogen-Atom bezeichnet,
mit einem Phenol der allgemeinen Formel

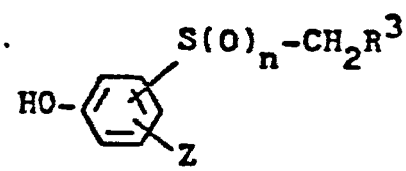

(III)

,

in der
$R^3$, Z und n die im Vorstehenden angegebenen Bedeutungen haben,
in Gegenwart einer Base.

Verfahren ii)

In dem Fall, in dem X = S, umfaßt ein Verfahren zur Herstellung der organischen Phosphorsäureester der allgemeinen Formel

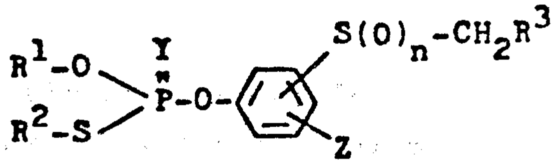

(I-a)

in der
Y, $R^1$, $R^2$, $R^3$, Z und n die im Vorstehenden angegebenen Bedeutungen haben,

die Reaktion eines Phosphorsäure-Salzes der allgemeinen Formel

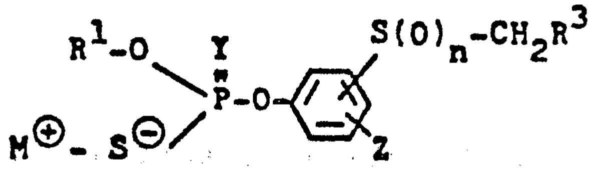

(IV)

,

in der
Y, $R^1$, $R^3$, Z und n die im Vorstehenden angegebenen Bedeutungen haben und M ein Alkalimetall oder eine Ammonium-Gruppe bezeichnet,

mit einem Halogenid der allgemeinen Formel

$R^2$-Hal (V),

in der
$R^2$ und Hal die im Vorstehenden angegebenen Bedeutungen haben.

Weiterhin können die organischen Phosphorsäureester der allgemeinen Formel (I) gemäß der vorliegenden Erfindung auch mittels des folgenden Verfahrens (iii) hergestellt werden. Verbindungen der allgemeinen Formel (I), in denen n = 2, können auch mittels des nachfolgenden Verfahrens (iv) hergestellt werden.

Verfahren iii)

Ein Verfahren zur Herstellung der organischen Phosphorsäureester der allgemeinen Formel (I) umfaßt die Reaktion eines Phosphorsäureesterhalogenids der allgemeinen Formel

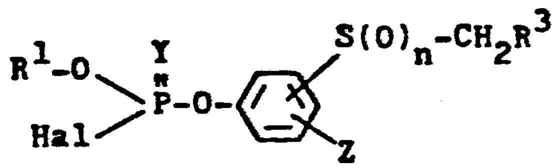 (VI)

,

in der

Y, $R^1$, $R^3$, Z, n und Hal die im Vorstehenden angegebenen Bedeutungen haben,

mit einer Verbindung der allgemeinen Formel

$R^2$-X-H (VII),

in der

X und $R^2$ die im Vorstehenden angegebenen Bedeutungen haben.

Verfahren iv) (n = 2)

Ein Verfahren zur Herstellung der organischen Phosphorsäureester der allgemeinen Formel

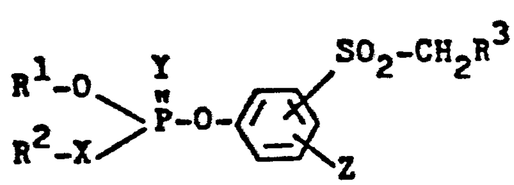 (I-b)

,

in der

X, Y, $R^1$, $R^2$, $R^3$ und Z die im Vorstehenden angegebenen Bedeutungen haben,

umfaßt die Reaktion eines organischen Phosphorsäureesters der allgemeinen Formel

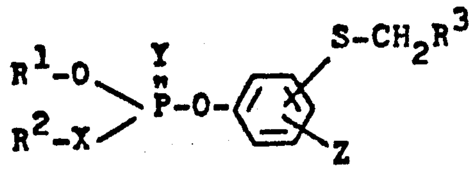

(I-c)

,

in der

X, Y, $R^1$, $R^2$, $R^3$ und Z die im Vorstehenden angegebenen Bedeutungen haben,

mit einem Peroxid.

Die vorliegende Erfindung betrifft außerdem arthropodizide (insektizide, mitizide) und nematizide Mittel, die die organischen Phosphorsäureester der allgemeinen Formel (I) enthalten.

Die US-PS 4 139 615 (entsprechend der JP-OS 151151/1977), eine vor der Einreichung der vorliegenden Anmeldung bekannte Veröffentlichung stellt sinngemäß fest, daß Verbindungen der allgemeinen Formel

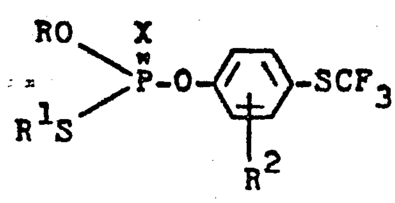

(A)

,

in der

R und $R^1$ Alkyl sind,

$R^2$ Wasserstoff oder Alkyl ist und

X Sauerstoff oder Schwefel ist,

insektizide, mitizide und nematizide Aktivitäten besitzen.

Die vorliegende Erfindung betrifft neue Phosphorsäureester der Formel (I) die in unerwarteter Weise herausragende biologische Aktivitäten besitzen. Insbesondere zeigen die aktiven Verbindungen der Formel (I) eine sehr gute Bekämpfungswirkung gegenüber Schadinsekten, Milben und Nematoden in Land- und Forstwirtschaft, Gartenbau und Viehzucht.

Ein Ziel der vorliegenden Erfindung ist es deshalb, die neuen organischen Phosphorsäureester der allgemeinen Formel (I), Verfahren zu ihrer Herstellung und ihre Verwendung als insektizide, mitizide und nematizide Mittel verfügbar zu machen.

In den allgemeinen Formeln sind die niederen Alkyl-Gruppen $R^1$ und $R^2$ gleich oder verschieden voneinander und geradkettige oder verzweigte Alkyl-Gruppen mit vorzugsweise 1 bis 6, insbesondere 1 bis 4 Kohlenstoff-Atomen. Methyl, Ethyl, n- und iso-Propyl, n-iso-, sec- und tert-Butyl seien als Beispiele erwähnt. $R^1$ bezeichnet besonders bevorzugt Methyl oder Ethyl. Besonders bevorzugte Alkyl-Gruppen $R^2$ sind Methyl, Ethyl, n- und iso-Propyl und sec-Butyl.

In den niederen Alkoxy-Niederalkyl-Gruppen $R^2$ können die Alkyl-Teile gleiche oder unterschiedliche sein und geradkettig oder verzweigt sein, und jeweils vorzugsweise 1 bis 4, insbesondere 1 bis 2 Kohlenstoff-Atome besitzen. Methoxymethyl, Ethoxyethyl, Methoxyethyl und Ethoxymethyl seien als Beispiele für die niederen Alkoxy-Niederalkyl-Gruppen $R^2$ erwähnt.

Die niederen Alkyl- und niederen Alkoxy-Gruppen Z sind geradkettig oder verzweigt und besitzen vorzugsweise 1 bis 6, bevorzugt 1 bis 4 und insbesondere 1 bis 2 Kohlenstoff-Atome. Als Beispiele seien Methyl, Ethyl, Methoxy und Ethoxy genannt.

Die fluoro-substituierten niederen Alkyl-Gruppen $R^3$ können geradkettig oder verzweigt sein und besitzen vorzugsweise 1 bis 6, bevorzugt 1 bis 4 und insbesondere 1 bis 2 Kohlenstoff-Atome. Diese Alkyl-Gruppen sind substituiert durch vorzugsweise 1 bis 5, bevorzugt 1 bis 4 und insbesondere 1 bis 3 Fluor-Atome. Als besonders bevorzugte Gruppen $R^3$ seien die $CF_3$-Gruppe und die $CF_2CHF_2$-Gruppe erwähnt. Vor allen anderen bevorzugt ist die $CF_3$-Gruppe.

Das Halogen Z bedeutet Fluoro, Chloro, Bromo und Iodo, vorzugsweise Fluoro, Chloro und Bromo, besonders bevorzugt Chloro und Bromo und vor allen anderen bevorzugt Chloro.

X bezeichnet O, S oder NH, vorzugsweise O oder S.

n bezeichnet 0 oder 2, vorzugsweise 0.

Die Gruppe Z kann sich in allen möglichen Positionen des Phenyl-Rings befinden. Vorzugsweise steht sie in der 2- oder 3-Position (bzw. in der 5- oder 6-Position) und insbesondere in der 3-Position (oder 5-Position).

Die $S(O)_n-CH_2-R^3$ -Gruppe kann sich in allen möglichen Positionen des Phenyl-Rings befinden. Vorzugsweise steht sie in der 2-, 3- oder 4-Position (bzw. in der 4, 5- oder 6-Position), und insbesondere steht sie in der 4-Position.

Das Hal in den allgemeinen Formeln II, V und VI bedeutet Fluoro, Chloro, Bromo und Iodo, vorzugsweise Chloro und Bromo, und vor allen anderen bevorzugt Chloro.

Das Me in der Formel IV bedeutet ein Alkalimetall wie Natrium oder Kalium oder eine Ammonium-Gruppe, die die unsubstituierte Ammonium-Gruppe oder eine der organischen Ammonium-Gruppen, etwa eine Niederalkyl-ammonium-Gruppe (mit vorzugsweise 1 bis 4 Kohlenstoff-Atomen pro Alkyl-Gruppe), wie z.B. Trimethylammonium oder Triethylammonium, sein kann.

Bevorzugt sind diejenigen Verbindungen der allgemeinen Formel (I), in denen

X O, S oder NH bezeichnet,
Y O oder S bezeichnet,
$R^1$ Methyl oder Ethyl bezeichnet,
$R^2$ Alkyl mit 1 bis 4 Kohlenstoff-Atomen oder Alkoxyalkyl mit 1 bis 4 Kohlenstoff-Atomen in jeder Alkyl-Gruppe bezeichnet,
$R^3$ $CF_3$ oder $CF_2CHF_2$ bezeichnet,
Z 3-Methyl, 3-Methoxy oder 3-Chloro bezeichnet,
n 0 oder 2 bezeichnet und die
$S(O)_n-CH_2-R^3$ -Gruppe in der 4-Position steht.

Besonders bevorzugt sind diejenigen Verbindungen der allgemeinen Formel (I), in denen

X O oder S bezeichnet,
Y O oder S bezeichnet,
$R^1$ Methyl oder Ethyl bezeichnet,
$R^2$ Methyl, Ethyl, n- und i-Propyl, sec-Butyl und Ethoxyethyl bezeichnet,
$R^3$ $CF_3$ oder $CF_2CHF_2$ bezeichnet,
Z 3-Methyl bezeichnet,
n 0 oder 2 bezeichnet und die
$S(O)_n-CH_2-R^3$ -Gruppe in der 4-Position steht.

Die Verbindungen der Formel (I) gemäß der vorliegenden Erfindung können beispielsweise mittels der folgenden Verfahren hergestellt werden:

Verfahren i)

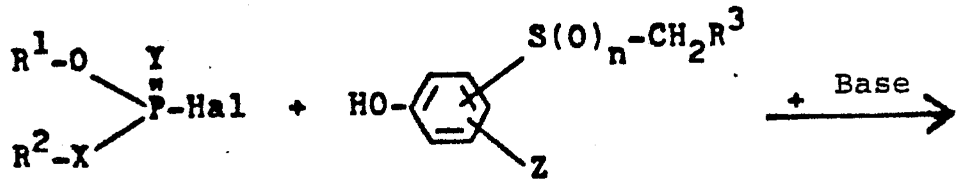


(II) (III)

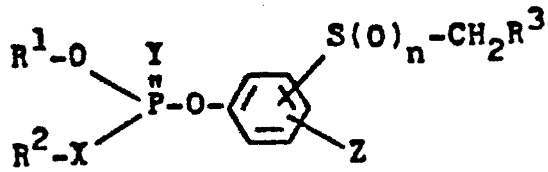

(I)

(In den obigen Formeln haben X, Y, $R^1$, $R^2$, $R^3$, Z und n die im Vorstehenden angegebenen Bedeutungen).

In dem durch das vorstehende Reaktionsschema dargestellten Verfahren zur Herstellung der Verbindungen gemäß der vorliegenden Erfindung zählen zu speziellen Beispielen für das als Ausgangsmaterial eingesetzte Phosphorsäureesterhalogenid der allgemeinen Formel (II):

O-Ethyl-S-propylthiophosphorylchlorid,
O-Ethyl-S-propyldithiophosphorylchlorid,
O,O-Diethylthiophosphorylchlorid,
O,O-Dimethylthiophosphorylchlorid,
O-Ethyl-S-sec-butylthiophosphorylchlorid,
O-Ethyl-S-ethoxyethylthiophosphorylchlorid,
O-Ethyl-N-isopropylamidothiophosphorylchlorid und
O-Ethyl-N-isopropylamidophosphorylchlorid.

Die entsprechenden Bromide können ebenfalls als Beispiele angeführt werden.

Zu speziellen Beispielen für das Phenol der allgemeinen Formel (III), das gleichermaßen ein Ausgangsmaterial ist, zählen:

3-Methyl-4-(2,2,2-trifluoroethylthio)phenol,
3-Methyl-2-(2,2,2-trifluoroethylthio)phenol,
3-Methyl-4-(2,2,2-trifluoroethylsulfonyl)phenol,
3-Methyl-4-(2,2,3,3-tetrafluoropropylthio)phenol,
3-Methyl-2-(2,2,3,3-tetrafluoropropylthio)phenol,
3-Methyl-4-(2,2,3,3,3-pentafluoropropylthio)-phenol,
3-Methyl-4-(2,2,3,3-tetrafluoropropylsulfonyl)phenol,
3-Methoxy-4-(2,2,2-trifluoroethylthio)phenol und
3-Chloro-4-(2,2,2-trifluoroethylthio)phenol.

Zu speziellen Beispielen für die in dem vorstehenden Reaktionsschema verwendeten Basen zählen anorganische Basen wie Natriumhydroxid, Kaliumhydroxid, Kaliumcarbonat und Natriumcarbonat und organische Basen wie Triethylamin, Pyridin, N,N-Dimethylanilin und Isopropylamin.

Das vorerwähnte Herstellungsverfahren wird anhand eines typischen Beispiels im einzelnen erläutert.

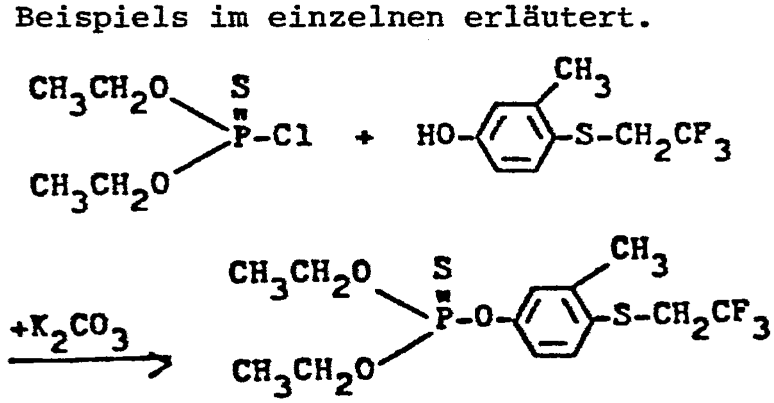

Das Verfahren zur Herstellung der aktiven Verbindungen gemäß der vorliegenden Erfindung kann zweckmäßigerweise unter Verwendung eines Lösungsmittels oder Verdünnungsmittels durchgeführt werden. Zu diesem Zweck können alle inerten Lösungsmittel oder Verdünnungsmittel verwendet werden.

Beispiele für solche Lösungsmittel oder Verdünnungsmittel umfassen Wasser; aliphatische, alicyclische und aromatische Kohlenwasserstoffe (die gegebenenfalls chloriert sein können) wie Hexan, Cyclohexan, Petrolether, Ligroin, Benzol, Toluol, Xylol, Methylenchlorid, Chloroform, Kohlenstofftetrachlorid, Ethylenchlorid, Trichloroethylen und Chlorbenzol; Ether wie Diethylether, Methylethylether, Di-isopropylether, Dibutylether, Propylenoxid, Dioxan und Tetrahydrofuran; Ketone wie Aceton, Methylethylketon, Methylisopropylketon und Methylisobutylketon; Nitrile wie Acetonitril, Propionitril und Acrylnitril; tertiäre Alkohole wie tert-Butylalkohol; Ester wie Ethylacetat und Amylacetat; Säureamide wie Dimethylformamid und Dimethylacetamid; Sulfone und Sulfoxide wie Dimethylsulfoxid und Sulfolan; sowie Basen wie Pyridin.

Die Reaktion gemäß der vorliegenden Erfindung kann, wie bereits erwähnt, in Gegenwart eines säurebindenden Mittels durchgeführt werden. Beispiele für das säurebindende Mittel sind die Hydroxide, Carbonate und Alkoholate von Alkalimetallen sowie tertiäre Amine (z.B. Triethylamin, Diethylanilin, Dimethylanilin und Pyridin), die normalerweise verwendet werden.

Das Verfahren gemäß der vorliegenden Erfindung kann innerhalb eines weiten Bereichs der Temperatur durchgeführt werden. Beispielsweise kann es bei einer Temperatur zwischen etwa 0°C und etwa 150°C, vorzugsweise zwischen etwa 10°C und etwa 70°C durchgeführt werden. Zweckmäßigerweise wird die Reaktion unter atmosphärischem Druck durchgeführt, jedoch ist es auch möglich, unter erhöhtem oder vermindertem Druck zu arbeiten.

Mittels des im Vorstehenden beschriebenen Verfahrens i) können die Endprodukte gemäß der vorliegenden Erfindung in hoher Reinheit mit hohen Ausbeuten erhalten werden.

Die Verbindungen gemäß der vorliegenden Erfindung können außerdem auch mittels der folgenden Verfahren ii), iii) und iv) hergestellt werden.

<u>Verfahren ii)</u>
in dem Fall, in dem X = S:

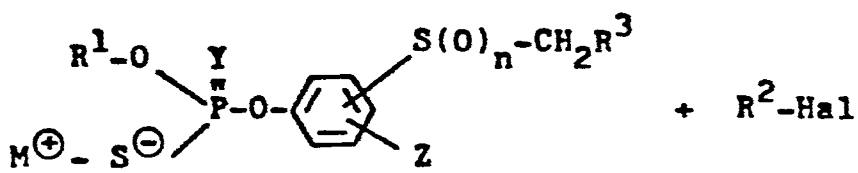

(IV) (V)

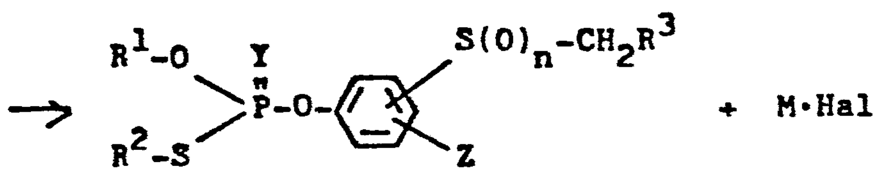

(I')

(In den Formeln haben Y, $R^1$, $R^2$, $R^3$, Z, n, Hal und M die im Vorstehenden angegebenen Bedeutungen).

Verfahren iii)

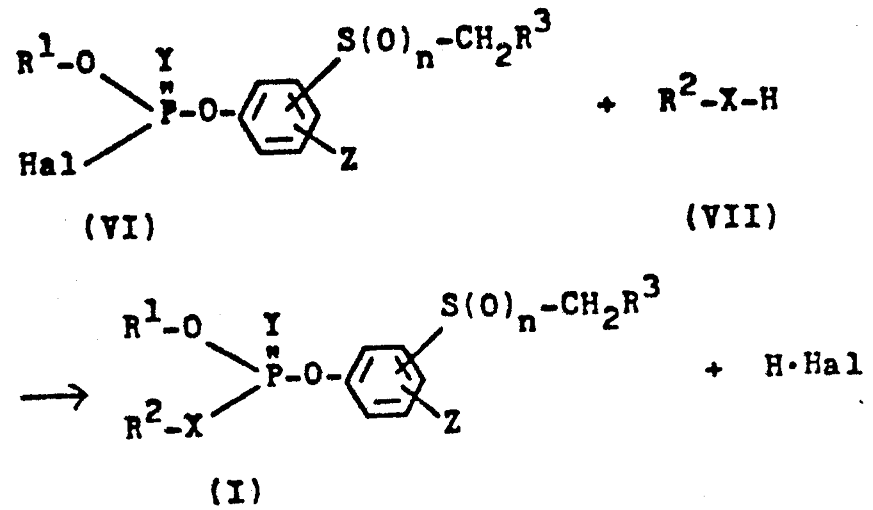

(VI) (VII)

(I)

Verfahren iv)

in dem Fall, in dem n = 2:

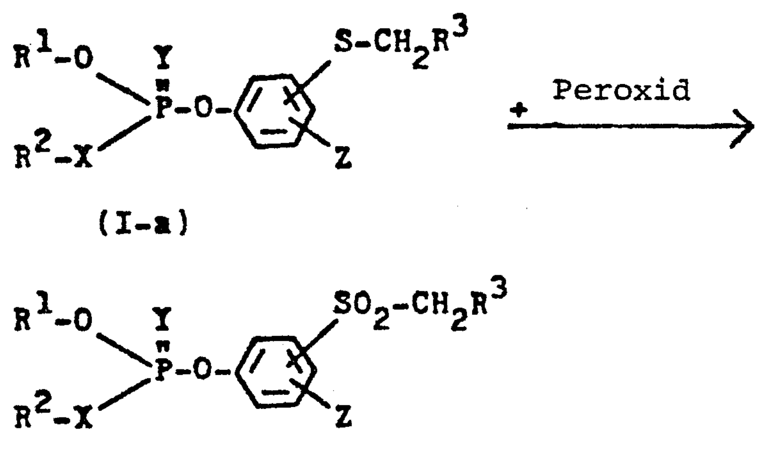


(I-a)

(I-b)

(In den vorstehenden Formeln haben X, Y, $R^1$, $R^2$, $R^3$ und Z die im Vorstehenden angegebenen Bedeutungen).

Die folgenden Bezugsbeispiele werden für die obigen Verfahren ii), iii) und iv) angegeben.

Verfahren ii) - Bezugsbeispiel:

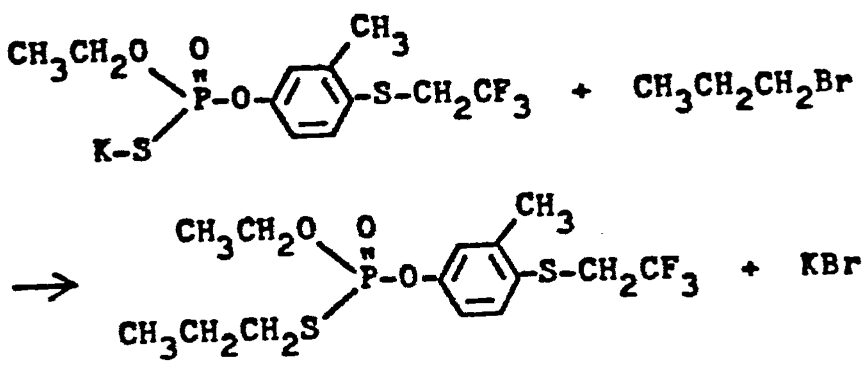

Das vorstehende Verfahren kann in einfacher Weise unter den gleichen Reaktionsbedingungen und unter Verwendung der gleichen inerten Lösungsmittel oder Verdünnungsmittel, die beispielhaft für das Verfahren i) angegeben wurden, durchgeführt werden.

Verfahren iii) - Bezugsbeispiel:

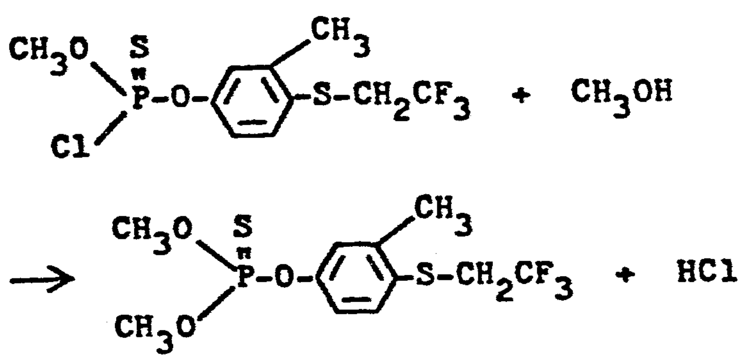

Das vorstehende Verfahren kann in einfacher Weise unter den gleichen Reaktionsbedingungen und unter Verwendung der gleichen inerten Lösungsmittel oder Verdünnungsmittel, die beispielhaft für das Verfahren i) angegeben wurden, jedoch mit Ausnahme von Wasser und Alkoholen, durchgeführt werden.

Verfahren iv) - Bezugsbeispiel:

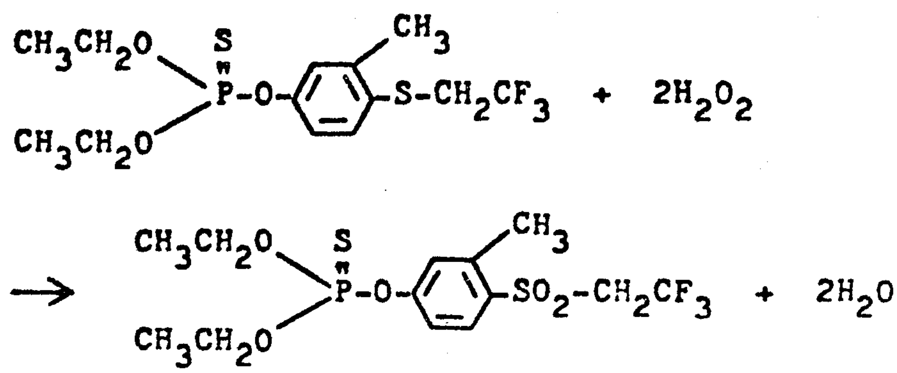

In dem vorstehenden Reaktionsschema kann m-Chloroperbenzoesäure etc. an Stelle des Hydrogenperoxids eingesetzt werden.

Das vorstehende Verfahren kann in einfacher Weise unter den gleichen Reaktionsbedingungen und unter Verwendung der gleichen inerten Lösungsmittel oder Verdünnungsmittel, die beispielhaft für das Verfahren i) angegeben wurden, durchgeführt werden.

Die aktiven Verbindungen der vorliegenden Erfindung zeigen eine genaue Bekämpfungswirkung gegen schädliche Insekten, Milben und Nematoden, ohne daß sie phytotoxisch gegen Kulturpflanzen wirken. Die Verbindungen gemäß der vorliegenden Erfindung können zur Bekämpfung und Ausrottung einer großen Mannigfaltigkeit von Schädlingen, saugenden und beißenden Schadinsekten, anderen Pflanzenparasiten, Schädlingen von Lagergetreide und Schädlingen, die auf dem Gebiet der Hygiene von Bedeutung sind, eingesetzt werden.

Spezielle Beispiele für diese Schädlinge sind nachstehend aufgeührt:

Zu Beispielen für Insekten zählen

Insekten der Ordnung Coleoptera, wie etwa
Callosobruchus chinensis,
Sitophilus zeamais,
Tribolium castaneum,
Epilachna vigintioctomaculata,
Agriotes fuscicollis,
Anomala rufocuprea,
Leptinotarsa decemlineata,
Diabrotica spp.,
Monochamus alternatus und
Lyctus brunneus;

Insekten der Ordnung Lepidoptera, wie etwa
Lymantria dispar,
Malacosoma neustria,
Pieris rapae,
Spodoptera litura,
Mamestra brassicae,
Chilo suppressalis,
Pyrausta nubilalis,
Ephestia cautella,
Adoxophyes orana,
Carpocapsa pomonella,
Galleria mellonella und
Phyllocnistis citrella;

Insekten der Ordnung Hemiptera, wie etwa
Nephotettix cincticeps,
Nilaparvata lugens,
Pseudococcus comstocki,
Unaspis yanonensis,

Myzus persicae,
Aphis pomi,
Rhopalosiphum pseudobrassicas,
Stephanitis nashi,
Nazara spp.,
Cimex lectularius,
Trialeurodes vaporariorum und
Psylla spp.;

Insekten der Ordnung Orthoptera, wie etwa
Blatella germanica,
Periplaneta americana,
Gryllotalpa africana und
Locusta migratoria migratoriodes;

Insekten der Ordnung Isoptera, wie etwa
Deucotermes speratus und
Coptotermes formosanus; sowie

Insekten der Ordnung Diptera, wie etwa
Musca domestica,
Aedes aegypti,
Hylemia platura,
Culex pipiens,
Anopheles sinensis,
Culex tritaeniorhynchus;

Beispiele für die Milben sind:
Tetranychus telarius,
Panonychus citri,
Aculus pelekassi und
Torronomus spp. und

Beispiele für die Nematoden sind:

Meloidogyne incognita,
Bursaphelenchus lignicolus Mamiya et Kiyohara,
Aphelenchoides besseyi,
Heterodera glycines und
Pratylenchus spp..

Auf dem Gebiet der Tierhaltung und Viehzucht können die neuen Verbindungen gemäß der vorliegenden Erfindung in wirksamer Weise gegen verschiedene Tierparasiten (innere und äußere Parasiten) wie Milben (einschließlich Zecken), Insekten und Würmer verwendet werden.

Zu speziellen Beispielen für solche Tierparasiten zählen solche Milben wie

Oranithodoros spp.,
Ixodes spp. und
Boophilus spp.,

und solche Insekten wie

Gastrophilus spp.,
Stomoxys spp.,
Trichodectes spp.
Rhodnius spp. und
Ctenocephalidex canis

In der vorliegenden Erfindung werden Substanzen, die eine Bekämpfungswirksamkeit gegenüber diesen Schädlingen aufweisen, gelegentlich durch die Gattungsbegriffe "Schädlingsbekämpfungsmittel" bzw. "Pestizide" bezeichnet.

Für den Einsatz als insektizides, mitizides und nematizides Mittel können die aktiven Verbindungen gemäß der vorliegenden Erfindung als solche direkt nach dem Verdünnen mit Wasser angewandt oder vorher zu verschiedenen Wirkstoffpräparaten formuliert werden, wie sie unter Verwendung landwirtschaftlich unbedenklicher Hilfsstoffe durch Verfahren gewonnen werden, die bei der praktischen Herstellung von Agrochemikalien allgemein angewandt werden. Im praktischen Gebrauch werden diese verschiedenen Formulierungen entweder unmittelbar oder nach dem Verdünnen mit Wasser auf die gewünschte Konzentration eingesetzt.

Beispiele für die landwirtschaftlich unbedenklichen Hilfsstoffe sind Verdünnungsmittel (Lösungsmittel, Streckmittel, Träger), oberflächenaktive Mittel (Lösungsvermittler, Emulgatoren, Dispergiermittel, Netzmittel), Stabilisatoren, Haftmittel, Aerosol-Treibmittel und synergistische Mittel.

Beispiele für die Lösungsmittel sind Wasser und organische Lösungsmittel, beispielsweise Kohlenwasserstoffe /¯z.B. n-Hexan, Petrolether, Naphtha, Erdöl-Fraktionen (z.B. Paraffinwachse, Kerosin, Leichtöle, Mittelöle und Schweröle), Benzol, Toluol und Xylole_7, halogenierte Kohlenwasserstoffe (z.B. Methylenchlorid, Kohlenstofftetrachlorid, Trichloroethylen, Ethylenchlorid, Ethylendibromid, Chlorbenzol und Chloroform), Alkohole (z.B. Methylalkohol, Ethylalkohol, Propylalkohol und Ethylenglycol), Ether (z.B. Ethylether, Ethylenoxid und Dioxan), Alkohol-ether (z.B. Ethylenglycol-monomethylether), Ketone (z.B. Aceton und Isophoron), Ester (z.B. Ethylacetat und Amylacetat), Amide (z.B. Dimethylformamid und Dimethylacetamid) und Sulfoxide (z.B. Dimethylsulfoxid).

Beispiele für die Streckmittel oder Träger umfassen anorganische Pulver, beispielsweise Löschkalk, Magnesiumkalk, Gips, Calciumcarbonat, Siliciumdioxid, Perlit, Bimsstein, Calcit, Diatomeenerde, amorphes Siliciumdioxid, Aluminiumoxid, Zeolithe und Tonminerale (z.B. Pyrophyllit, Talkum, Montmorillonit, Beidellit, Vermikulit, Kaolinit und Glimmer), pflanzliche Pulver wie beispielsweise Getreidepulver, Stärkearten, verarbeitete Stärkearten, Zucker, Glucose und zerkleinerte Stengel von Pflanzen, sowie Pulver aus synthetischen Harzen wie Phenol-Harzen, Harnstoff-Harzen und Vinylchlorid-Harzen.

Beispiele für die oberflächenaktiven Mittel umfassen anionische oberflächenaktive Mittel wie Alkylschwefelsäureester (z.B. Natriumlaurylsulfat), Arylsulfonsäure-Salze (z.B. Alkylarylsulfonsäure-Salze und Natriumalkylnaphthalinsulfonate), Bernsteinsäure-Salze und Salze von Schwefelsäureestern von Polyethylenglycol-alkylarylethern, kationische oberflächenaktive Mittel wie Alkylamine (z.B. Laurylamin, Stearyltrimethylammoniumchlorid und Alkyldimethylbenzylammoniumchlorid) und Polyoxyethylenalkylamine, nicht-ionische oberflächenaktive Mittel wie Polyoxyethylenglycolether (z.B. Polyoxyethylenalkylarylether und deren Kondensationsprodukte), Polyoxyethylenglycolester (z.B. Polyoxyethylenfettsäureester) und Ester mehrwertiger Alkohole (z.B. Polyoxyethylensorbitan-monolaurat) sowie amphotere oberflächenaktive Mittel.

Beispiele für andere Hilfsstoffe umfassen Stabilisatoren, Haftmittel (z.B. landwirtschaftliche Seifen, Casein-Kalk, Natriumalginat, Polyvinylalkohol, Haftmittel vom Vinylacetat-Typ und Acryl-Haftmittel), Aerosol-Treibmittel (z.B. Trichlorofluoromethan, Dichlorofluoromethan, 1,2,2-Trichloro-1,1,2-trifluoroethan, Chlorbenzol, verflüssigtes Erdgas (LNG) und niedere Ether), die Verbrennung steuernde Mittel für Räucherung und Begasung (z.B. Nitrit-Salze, Zink-Pulver und Dicyandiamid), sauerstoff-abgebende Mittel (z.B. Chlorate und Dichromat-Salze), Dispersions-Stabilisatoren (z.B. Casein, Tragant, Carboxymethylcellulose (CMC) und Polyvinylalkohol (PVA)) und synergistische Mittel.

Die Verbindungen der vorliegenden Erfindung können mittels der allgemein auf dem Gebiet der Agrochemikalien gebräuchlichen Verfahren zu verschiedenen Präparaten formuliert werden. Beispiele für solche Anwendungsformen sind emulgierbare Konzentrate, Öle, benetzbare Pulver, lösliche Pulver, Suspensionen, Stäubemittel, Granulat, pulvrige Mittel, Räuchermittel, Tabletten, Aerosole, Pasten und Kapseln.

Das insektizide, mitizide oder nematizide Mittel gemäß der vorliegenden Erfindung kann etwa 0,1 bis etwa 95 Gew.-%, vorzugsweise etwa von 0,5 bis 10 Gew.-% des vorerwähnten Wirkstoffes enthalten.

Für den praktischen Gebrauch beträgt die geeignete Menge der aktiven Verbindung in den vorgenannten Mitteln in ihren verschiedenen Formen und gebrauchsfertigen Präparaten beispielsweise etwa 0,0001 bis etwa 20 Gew.-%, vorzugsweise etwa 0,005 bis etwa 10 Gew.-%.

Der Gehalt des Wirkstoffs kann in geeigneter Weise je nach der Art der Formulierung, dem Verfahren, Zweck,

der Zeit und dem Ort seiner Anwendung, dem Zustand des Auftretens der zu bekämpfenden Schädlinge etc. variiert werden.

Erforderlichenfalls können die Verbindungen gemäß der vorliegenden Erfindung weiterhin auch in Kombination mit anderen Agrochemikalien verwendet werden, beispielsweise mit anderen Insektiziden, Fungiziden, anderen Mitiziden, anderen Nematiziden, Anti-Virus-Mitteln, Herbiziden, Pflanzen-Wachstumsregulatoren und Lockstoffen /¯z.B. Organophosphatester-Verbindungen, Carbamat-Verbindungen, Dithio(oder thiol)carbamat-Verbindungen, Organochlor-Verbindungen, Dinitro-Verbindungen, organischen Schwefel- oder metallorganische Verbindungen, Antibiotika, substituierten Diphenylether-Verbindungen, Harnstoff-Verbindungen und Triazin-Verbindungen_7 und/ oder Düngemitteln.

Den im Vorstehenden bezeichneten Wirkstoff enthaltende verschiedenartige Mittel und gebrauchsfertige Präparate können mittels verschiedener Verfahren zur Anwendung gebracht werden, wie sie allgemein für das Aufbringen von Agrochemikalien gebräuchlich sind, beispielsweise durch Sprühen (Versprühen von Flüssigkeiten, Vernebeln, Zerstäuben, Stäuben, Streuen von Granulat, Wasser-Oberflächenbehandlung und Gießen), Räuchern und Begasen, Bodenbehandlung (Vermischen mit dem Boden, Spritzen, Bedampfen und Gießen), Oberflächen-Anwendung (z.B. Beschichten, Aufbringen in Form von Bändern, Beschichten mit Staub und Bedecken) und Eintauchen. Sie können auch mittels des sogenannten Ultra-Low-Volume-Sprühverfahrens aufgebracht werden. Nach diesem Verfahren kann der Wirkstoff sogar in einer Konzentration von 100 % eingearbeitet sein.

Die Aufwandmenge pro Flächeneinheit beträgt etwa 0,03 bis etwa 10 kg/ha, vorzugsweise etwa 0,3 bis etwa 6 kg/ha. In besonders gelagerten Fällen können oder sollten sogar die Aufwandmengen außerhalb des angegebenen Bereichs liegen.

Gemäß der vorliegenden Erfindung kann ein insektizides, mitizides oder nematizides Mittel zur Verfügung gestellt werden, das als Wirkstoff die Verbindung der allgemeinen Formel (I) sowie ein Verdünnungsmittel (ein Lösungsmittel und/oder ein Streckmittel und/oder einen Träger) und/oder ein oberflächenaktives Mittel und, falls weiterhin erforderlich, einen Stabilisator, ein Haftmittel, ein synergistisches Mittel etc. enthält.

Die vorliegende Erfindung macht weiterhin ein Verfahren zur Bekämpfung von Insekten, Milben und Nematoden verfügbar, das darin besteht, daß eine Verbindung der allgemeinen Formel (I) allein oder in Form einer Mischung mit einem Verdünnungsmittel (einem Lösungsmittel und/oder einem Streckmittel und/oder einem Träger) und/oder einem oberflächenaktiven Mittel und, falls weiterhin erforderlich, einem Stabilisator, einem Haftmittel, einem synergistischen Mittel etc. auf Insekten, Milben und Nematoden und/oder ihren Lebensraum aufgebracht wird.

Die vorliegende Erfindung wird durch die folgenden Beispiele im einzelnen erläutert, ist jedoch nicht auf diese speziellen Beispiele allein beschränkt.

Beispiel 1

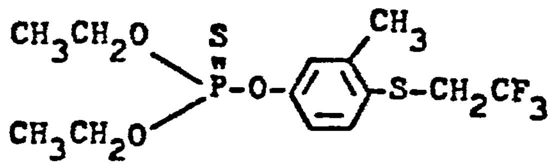

(Verbindung Nr. 1)

Bei 20°C bis 30°C wurden 23,6 g O,O-Diethylthiophosphorylchlorid tropfenweise zu einer Mischung aus 30 g 3-Methyl-4-(2,2,2-trifluoroethylthio)phenol, 19 g wasserfreiem Kaliumcarbonat und 200 ml Methylisobutylketon hinzugefügt. Die Reaktionsmischung wurde 6 h bei 55°C bis 60°C ununterbrochen gerührt, abgekühlt und nacheinander, in dieser Reihenfolge, mit Wasser, einer 1-proz. wäßrigen Natriumhydroxid-Lösung und Wasser gewaschen. Die gereinigte organische Schicht wurde über wasserfreiem Natriumsulfat getrocknet, und niedrigsiedende Substanzen wurden unter vermindertem Druck abgedampft, wonach 43,6 g des angestrebten O,O-Diethyl-O-/¯3-methyl-4-(2,2,2-trifluoroethylthio)phenyl_7thiophosphats erhalten wurden. $n_D^{20}$ = 1,5076.

Nach im wesentlichen der gleichen Arbeitsweise wie oben wurde O,O-Dimethyl-O-/¯3-methyl-4-(2,2,2-trifluoroethylthio)phenyl_7thiophosphat ($n_D^{20}$ = 1,5202) der nachstehenden Formel

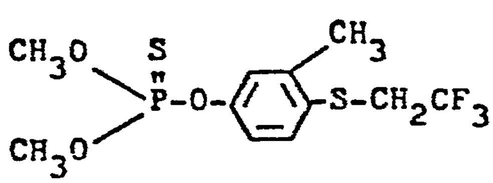

(Verbindung Nr. 2)

synthetisiert. Die hiernach in der Tabelle 1 aufgeführten Verbindungen wurden ebenfalls nach im wesentlichen der gleichen Arbeitsweise wie oben synthetisiert.

0127049

Tabelle 1

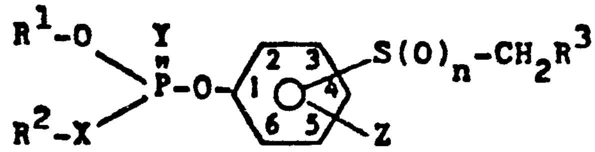

| Verbindung Nr. | X | Y | $R^1$ | $R^2$ | Z | $S(O)_n-CH_2R^3$ | Brechungs-Index $n_D^{20}$ |
|---|---|---|---|---|---|---|---|
| 3 | S | O | $-C_2H_5$ | $n-C_3H_7$ | $3-CH_3$ | $4-S-CH_2CF_2CHF_2$ | |
| 4 | S | O | $-C_2H_5$ | $n-C_3H_7$ | $3-CH_3$ | $4-S-CH_2CF_3$ | 1.5705 |
| 5 | S | O | $-C_2H_5$ | $n-C_3H_7$ | $3-CH_3$ | $6-S-CH_2CF_3$ | |
| 6 | S | S | $-C_2H_5$ | $n-C_3H_7$ | $3-CH_3$ | $4-S-CH_2CF_3$ | 1.5400 |
| 7 | O | S | $-C_2H_5$ | $-C_2H_5$ | $3-CH_3$ | $4-S(O)_2-CH_2CF_3$ | |
| 8 | S | O | $-C_2H_5$ | $sec-C_4H_9$ | $3-CH_3$ | $4-S-CH_2CF_3$ | |
| 9 | S | O | $-C_2H_5$ | $-C_2H_4OC_2H_5$ | $3-CH_3$ | $4-S-CH_2CF_3$ | |
| 10 | NH | S | $-C_2H_5$ | $iso-C_3H_7$ | $3-CH_3$ | $4-S-CH_2CF_3$ | |
| 11 | S | S | $-C_2H_5$ | $n-C_3H_7$ | 3-Cl | $4-S-CH_2CF_3$ | |
| 12 | S | O | $-C_2H_5$ | $n-C_3H_7$ | $3-OCH_3$ | $4-S-CH_2CF_3$ | |
| 13 | NH | O | $-C_2H_5$ | $iso-C_3H_7$ | $3-CH_3$ | $4-S-CH_2CF_3$ | 1.4907 |

Es wurde festgestellt, daß die in der Tabelle 1 aufgeführten Verbindungen in einfacher Weise mittels des Verfahrens i) hergestellt werden können. Andere Verbindungen gemäß der vorliegenden Erfindung als die im Vorstehenden beispielhaft aufgeführten können nach im wesentlichen dem gleichen Verfahren wie oben hergestellt werden. Die betreffenden Verbindungen können auch mittels der Verfahren ii) bis iv) hergestellt werden.

Beispiel 2

Benetzbares Pulver.

15 Teile der Verbindung Nr. 1 der Erfindung, 80 Teile eines Gemisches (1:5) aus Weißruß (feinpulvrigem wasserhaltigen amorphen Siliciumdioxid) und Tonpulver, 2 Teile Natriumalkylbenzolsulfonat und 3 Teile Natriumalkylnaphthalinsulfonat/Formaldehyd-Kondensat werden pulverisiert und zu einem benetzbaren Pulver vermischt. Dieses wird mit Wasser verdünnt und auf Insekten, Milben oder Nematoden und/oder ihren Lebensraum aufgesprüht.

Beispiel 3

Emulgierbares Konzentrat.

30 Teile der Verbindung Nr. 2 der Erfindung, 55 Teile Xylol, 8 Teile Polyoxyethylen-alkylphenylether und 7 Teile Calciumalkylbenzolsulfonat werden unter Rühren miteinander vermischt, wodurch ein emulgierbares Konzentrat hergestellt wird. Dieses wird mit Wasser verdünnt und auf Insekten, Milben oder Nematoden und/oder ihren Lebensraum aufgesprüht.

Beispiel 4

Stäubemittel.

2 Teile der Verbindung Nr. 3 der Erfindung und 98 Teile Tonpulver werden pulverisiert und gemischt, wodurch ein Stäubemittel hergestellt wird. Dieses wird über Insekten, Milben oder Nematoden und/oder ihrem Lebensraum ausgestreut.

Beispiel 5

Stäubemittel.

Die Verbindung Nr. 4 der Erfindung (1,5 Teile), 0,5 Teile Isopropylhydrogenphosphat und 98 Teile Tonpulver werden pulverisiert und gemischt, wodurch ein Stäubemittel hergestellt wird. Dieses wird über Insekten, Milben oder Nematoden und/oder ihrem Lebensraum ausgestreut.

Beispiel 6

Granulat.

Wasser (25 Teile) wird zu einer Mischung aus 10 Teilen der Verbindung Nr. 5 der Erfindung, 30 Teilen Bentonit (Montmorillonit), 58 Teilen Talkum und 2 Teilen Ligninsulfonat zugesetzt, und das Gemisch wird gut geknetet. Die Mischung wird mittels eines Extruder-Granulators zu einem Granulat mit einer Korngröße von 0,43 bis 2,0 mm (10 bis 40 mesh) verarbeitet und bei 40°C bis 50°C getrocknet, wodurch ein Granulat gebildet wird. Das Granulat wird über Insekten, Milben oder Nematoden und/oder ihrem Lebensraum ausgestreut.

Beispiel 7

Granulat.

Ein Drehmischer wird mit 95 Teilen Tonmineral-Teilchen mit einer Teilchengrößen-Verteilung zwischen 0,2 und 2 mm beschickt, und unter Drehen des Mischers werden 5 Gew.-Teile der Verbindung Nr. 6 der Erfindung zur gleichmäßigen Benetzung unter Bildung eines Granulats auf die Tonmineral-Teilchen aufgesprüht. Das Granulat wird über Insekten, Milben oder Nematoden und/ oder ihrem Lebensraum ausgestreut.

Beispiel 8

Öl.

Die Verbindung Nr. 7 der Erfindung (0,5 Teile) und 99,5 Teile Kerosin werden unter Rühren miteinander vermischt, wodurch ein Öl gebildet wird. Dieses wird auf Insekten, Milben oder Nematoden und/oder ihren Lebensraum aufgesprüht.

Beispiel 9

Test mit Callosobruchus chinensis:

Herstellung eines Test-Präparats:

| | | |
|---|---|---|
| Lösungsmittel: | Xylol | 3 Gew.-Teile |
| Emulgator: | Polyoxyethylen-alkylphenylether | 1 Gew.-Teil |

Zur Herstellung eines Test-Präparats einer geeigneten aktiven Verbindung wurde 1 Gew.-Teil der betreffenden

aktiven Verbindung mit der oben bezeichneten Menge Lösungsmittel, das die oben angegebene Menge Emulgator enthielt, vermischt, und die Mischung wurde mit Wasser auf eine vorher festgesetzte Konzentration verdünnt.

Test-Verfahren:
Ein Filterpapier wurde jeweils auf dem Boden einer Petrischale von 9 cm Durchmesser ausgebreitet, und 1 ml einer wäßrigen Verdünnung der aktiven Verbindung mit einer vorbestimmten Konzentration wurde jeweils in eine Schale gegeben. 20 Exemplare von Callosobruchus chinensis wurden eingesetzt, und die Petrischalen wurden in einen Raum mit einer konstanten Temperatur von 28°C gestellt. Nach 24 h wurde die Zahl der toten Insekten bestimmt und das Vernichtungsverhältnis berechnet.

Die Ergebnisse sind in der Tabelle 2 aufgeführt.

Tabelle 2

| Verbindung Nr. | Wirkstoff-Konzentration ppm | Vernichtungsverhältnis % |
|---|---|---|
| 1 | 1 | 100 |
| 2 | 1 | 100 |
| 3 | 1 | 100 |
| 4 | 1 | 100 |
| Vergleichs-Verbindung | | |
| A - 1 | 10 | 60 |
| | 1 | 0 |

Anmerkung siehe folgende Seite.

Anmerkung zu Tabelle 2: Vergleichs-Verbindung A - 1

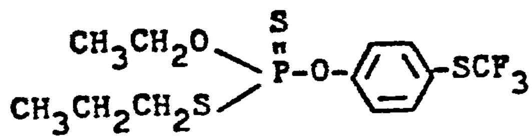

(Verbindung beschrieben in der US-PS 4 139 615).

Beispiel 10

Test mit Tetranychus telarius (Sprühtest):

Test-Verfahren:
50 bis 100 ausgewachsene Exemplare von Tetranychus telarius, die gegen Organophosphor-Mittel resistent waren, wurden auf den Blättern von Gartenerbsen im Stadium der Entwicklung von 2 Haupt-Blättern ausgesetzt, die in Töpfen mit einem Durchmesser von 6 cm gezogen worden waren. Nach 2 Tagen wurde eine wie in Beispiel 9 hergestellte wäßrige Verdünnung der aktiven Verbindung in einer Menge von 40 ml je Topf gesprüht. Die Töpfe wurden in ein Gewächshaus gestellt, und nach 10 Tagen wurde die Bekämpfungswirkung mit Hilfe der nachstehend bezeichneten Bekämpfungs-Indices bewertet:

3: Anteil der überlebenden ausgewachsenen Insekten: 0 %;

2: Anteil der überlebenden ausgewachsenen Insekten: mehr als 0 % und weniger als 5 %, bezogen auf eine unbehandelte Fläche;

1: Anteil der überlebenden ausgewachsenen Insekten: 5 bis 50 %, bezogen auf die unbehandelte Fläche;

0: Anteil der überlebenden ausgewachsenen Insekten: mehr als 50 %, bezogen auf die unbehandelte Fläche.

Die Ergebnisse sind in der Tabelle 3 aufgeführt.

Tabelle 3

| Verbindung Nr. | Wirkstoff-Konzentration ppm | Bekämpfungs-Index |
|---|---|---|
| 1 | 100 | 3 |
| 2 | 100 | 3 |
| 9 | 100 | 3 |
| Vergleichs-Verbindung A - 1 | 100 | 0 |

Anmerkung: Die Vergleichs-Verbindung A - 1 ist die gleiche wie in der Tabelle 2.

Beispiel 11

Test mit der deutschen Schabe (Blatella Germanica):

Test-Verfahren:
Ein Filterpapier wurde jeweils auf den Boden einer Petrischale von 9 cm Durchmesser gelegt, und 1 ml einer wäßrigen Verdünnung einer aktiven Verbindung mit einer vorbestimmten Konzentration, die wie in Beispiel 9 hergestellt wurde, wurde hinzugegeben. 10 ausgewachsene Exemplare von Blatella Germanica wurden in die Schale eingesetzt. Die Schalen wurden in einen Raum mit einer konstanten Temperatur von 28°C gestellt. Nach 24 h wurde die Zahl der toten Insekten bestimmt und das Vernichtungsverhältnis berechnet.

Die Ergebnisse sind in der Tabelle 4 aufgeführt.

Tabelle 4

| Verbindung Nr. | Wirkstoff-Konzentration ppm | Vernichtungsverhältnis % |
|---|---|---|
| 1 | 10 | 100 |
| 2 | 10 | 100 |
| 3 | 100 | 100 |
| 4 | 10 | 100 |
| 5 | 100 | 100 |
| 6 | 100 | 100 |
| 7 | 100 | 100 |
| 8 | 100 | 100 |
| Vergleichs-Verbindung | | |
| A - 1 | 100 | 10 |

Anmerkung: Die Vergleichs-Verbindung A - 1 ist die gleiche wie in der Tabelle 2.

Beispiel 12

Test mit Larven von Culex pipiens:

Test-Verfahren:
100 ml einer wäßrigen Verdünnung der aktiven Verbindung mit einer vorbestimmten Konzentration, die wie in Beispiel 9 hergestellt wurde, wurden jeweils in eine tiefe Petrischale mit einem Durchmesser von 9 cm gegeben, und 25 Larven im 4. Stadium von Culex pipiens wurden in die Schale eingesetzt. Die Schale wurde in einen Raum mit konstanter Temperatur von 28°C gestellt. Nach 24 h wurde die Zahl der toten Insekten bestimmt und das Vernichtungsverhältnis berechnet.

Die Ergebnisse sind in der Tabelle 5 aufgeführt.

Tabelle 5

| Verbindung Nr. | Wirkstoff-Konzentration ppm | Vernichtungsverhältnis % |
|---|---|---|
| 2 | 0,01 | 100 |
| Vergleichs-Verbindung | | |
| A - 1 | 0,1 | 70 |
| | 0,01 | 0 |

Anmerkung: Die Vergleichs-Verbindung A - 1 ist die gleiche wie in der Tabelle 2.

Beispiel 13

Test mit Meloidogyne incognita:

Herstellung des Test-Präparats:
2 Teile der aktiven Verbindung und 98 Teile Talkum wurden pulverisiert und miteinander vermischt.

Test-Verfahren:
Das wie im Vorstehenden beschrieben hergestellte Test-Präparat wurde zu durch Meloidogyne incognita verseuchter Erde in solchen Mengen hinzugefügt, daß es in Konzentrationen von 25 und 10 ppm vorlag. Erde und Präparat wurden unter Rühren gleichmäßig miteinander vermischt und anschließend in Töpfe von 2 $dm^2$ gefüllt. In diese Mischung wurden etwa 20 Körner Tomaten-Samen

(Varietät: Kurihara) pro Topf eingesät. Die Tomatenpflanzen wurden im Gewächshaus angezogen. Nach vier Wochen wurden die Tomatenpflanzen herausgezogen, ohne dabei ihre Wurzeln zu beschädigen. Der Grad der Schädigung wurde an 10 der herausgezogenen Tomatenpflanzen untersucht.

Die Test-Ergebnisse zeigen, daß die Verbindungen der vorliegenden Erfindung, beispielsweise die Verbindungen Nr. 10 und 13 eine Bekämpfungswirkung von annähernd 100 % erzielen, wenn sie in einer Wirkstoff-Konzentration von 10 bis 25 ppm zur Anwendung gebracht werden.

# Patentansprüche

1. Organische Phosphorsäureester der allgemeinen Formel (I)

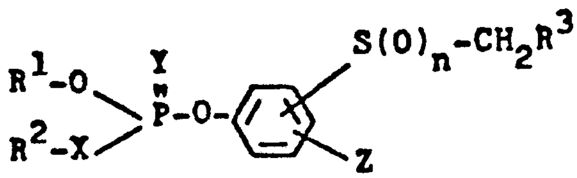

(I)

in der

X O, S oder NH bezeichnet,

Y O oder S bezeichnet,

$R^1$ eine niedere Alkyl-Gruppe bezeichnet,

$R^2$ eine niedere Alkyl-Gruppe oder eine niedere Alkoxy-Niederalkyl-Gruppe bezeichnet,

$R^3$ eine fluor-substituierte niedere Alkyl-Gruppe bezeichnet,

Z eine niedere Alkyl-Gruppe, eine niedere Alkoxy-Gruppe oder ein Halogen-Atom bezeichnet und

n 0 oder 2 bezeichnet.

2. Organische Phosphorsäureester nach Anspruch 1, dadurch gekennzeichnet, daß

X O, S oder NH bezeichnet,

Y O oder S bezeichnet,

$R^1$ Methyl oder Ethyl bezeichnet,

$R^2$ Alkyl mit 1 bis 4 Kohlenstoff-Atomen oder Alkoxyalkyl mit 1 bis 4 Kohlenstoff-Atomen in jeder Alkyl-Gruppe bezeichnet,

$R^3$ $CF_3$ oder $CF_2CHF_2$ bezeichnet,

Z 3-Methyl, 3-Methoxy oder 3-Chloro bezeichnet,

n  0 oder 2 bezeichnet und die $S(O)_n-CH_2-R^3$ -Gruppe in der 4-Position steht.

3. Organische Phosphorsäureester nach Anspruch 1, dadurch gekennzeichnet, daß

X  O oder S bezeichnet,

Y  O oder S bezeichnet,

$R^1$  Methyl oder Ethyl bezeichnet,

$R^2$  Methyl, Ethyl, n- und i-Propyl, sec-Butyl und Ethoxyethyl bezeichnet,

$R^3$  $CF_3$ oder $CF_2CHF_2$ bezeichnet,

Z  3-Methyl bezeichnet,

n  0 oder 2 bezeichnet und die $S(O)_n-CH_2-R^3$ -Gruppe in der 4-Position steht.

4. O,O-Dimethyl-O-/‾3-methyl-4-(2,2,2-trifluoroethylthio)-phenyl_7thiophosphat der nachstehenden Formel

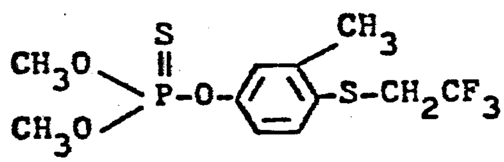

5. O,O-Diethyl-O-/‾3-methyl-4-(2,2,2-trifluoroethylthio)-phenyl_7thiophosphat der nachstehenden Formel

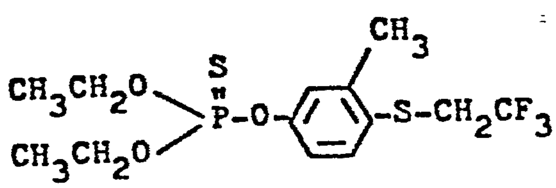

6. Verfahren zur Herstellung von organischen Phosphorsäureestern der allgemeinen Formel

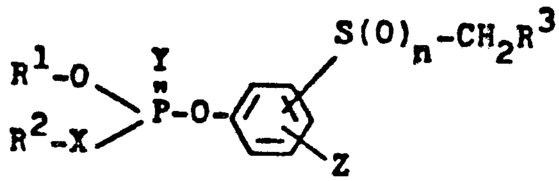

in der

X O, S oder NH bezeichnet,

Y O oder S bezeichnet,

$R^1$ eine niedere Alkyl-Gruppe bezeichnet,

$R^2$ eine niedere Alkyl-Gruppe oder eine niedere Alkoxy-Niederalkyl-Gruppe bezeichnet,

$R^3$ eine fluor-substituierte niedere Alkyl-Gruppe bezeichnet,

Z eine niedere Alkyl-Gruppe, eine niedere Alkoxy-Gruppe oder ein Halogen-Atom bezeichnet und

n 0 oder 2 bezeichnet,

dadurch gekennzeichnet, daß

i) ein Phosphorsäureesterhalogenid der allgemeinen Formel (II)

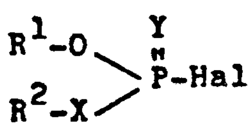

(II)

in der

X, Y, $R^1$, und $R^2$ die im Vorstehenden angegebenen Bedeutungen haben und

Hal ein Halogen-Atom bezeichnet,

mit einem Phenol der allgemeinen Formel (III)

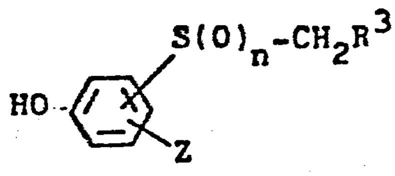

(III) ,

in der
$R^3$, Z und n die im Vorstehenden angegebenen Bedeutungen haben,
in Gegenwart einer Base umgesetzt wird, oder

ii) in dem Fall, in dem X = S, ein Phosphorsäure-Salz der allgemeinen Formel (IV)

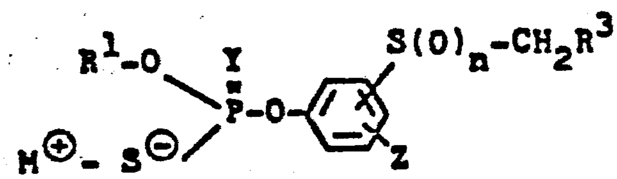

(IV) ,

in der
Y, $R^1$, $R^3$, Z und n die im Vorstehenden angegebenen Bedeutungen haben
und M ein Alkalimetall oder eine Ammonium-Gruppe bezeichnet,
mit einem Halogenid der allgemeinen Formel (V)

$R^2$-Hal (V),

in der
$R^2$ und Hal die im Vorstehenden angegebenen Bedeutungen haben, umgesetzt wird, oder

iii) ein Phosphorsäureesterhalogenid der allgemeinen Formel (VI)

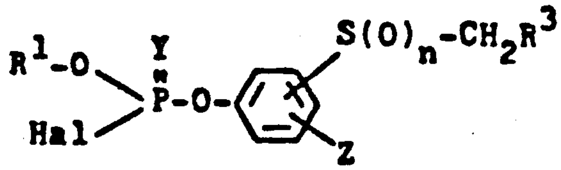

(VI) ,

in der

Y, $R^1$, $R^3$, Z, n und Hal die im Vorstehenden angegebenen Bedeutungen haben,

mit einer Verbindung der allgemeinen Formel (VII)

$R^2$-X-H (VII),

in der

X und $R^2$ die im Vorstehenden angegebenen Bedeutungen haben, umgesetzt wird, oder

iv) (in dem Fall, in dem n = 2) ein organischer Phosphorsäureester der allgemeinen Formel (I-c)

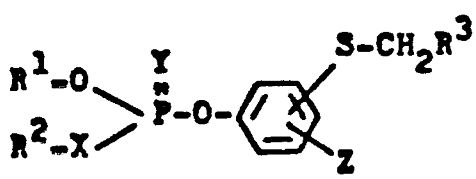

(I-c) ,

in der

X, Y, $R^1$, $R^2$, $R^3$ und Z die im Vorstehenden angegebenen Bedeutungen haben,

mit einem Peroxid umgesetzt wird.

7. Mittel zur Schädlingsbekämpfung, dadurch gekennzeichnet, daß sie wenigstens eine Verbindung der allgemeinen Formel (I) nach den Ansprüchen 1 oder 6 enthalten.

0127049

8. Verwendung der Verbindungen der allgemeinen Formel (I) nach den Ansprüchen 1 oder 6 zur Schädlingsbekämpfung, insbesondere von Arthropoden (wie Insekten oden Arachniden) und Nematoden.

9. Verfahren zur Bekämpfung von Schädlingen, dadurch gekennzeichnet, daß Verbindungen der allgemeinen Formel (I) nach den Ansprüchen 1 oder 6 auf die Schädlinge, vorzugsweise Arthropoden (wie Insekten oden Arachniden) und Nematoden oder deren Lebensraum zur Einwirkung gebracht werden.

10. Verfahren zur Herstellung von Mitteln zur Schädlingsbekämpfung, dadurch gekennzeichnet, daß Verbindungen der allgemeinen Formel (I) nach Anspruch 1 oder 6 mit Streckmitteln und/oder oberflächenaktiven Mitteln vermischt werden.